# EUROPÄISCHE PATENTSCHRIFT

(11) **EP 0 332 906 B1**
(45) Veröffentlichungstag und Bekanntmachung des Hinweises auf die Patenterteilung: **12.05.1993**
(21) Anmeldenummer: 89103346.6
(22) Anmeldetag: 24.02.1989
(51) Int. Cl.: G01B 3/56, G01B 5/24

(54) **Gehrungslehre**
Mitre gauge
Calibre à anglet

(30) Priorität: 31.03.1988 DE 8804395 U; 15.03.1988 DE 8803475 U
(43) Veröffentlichungstag der Anmeldung: 20.09.1989
(73) Patentinhaber: Maier, Erwin, D-82278 Althegnenberg (DE)
(72) Erfinder: Maier, Erwin, D-82278 Althegnenberg (DE)
(74) Vertreter: Säger, Manfred, Dipl.-Ing.

(56) Entgegenhaltungen:
- EP-A- 0 002 912
- DE-A- 3 630 079
- DE-C- 236 451
- GB-A- 548 114

## Beschreibung

Die Erfindung betrifft eine Vorrichtung gemäß dem Oberbegriff des Hauptanspruches.

Gehrungslehren sind in einer Vielzahl von Ausführungsformen bekannt. So gibt es solche gleichbreite, auf Gehrung zuzuschneidende Leisten bestimmte Vorrichtungen, welche immer einen 45°-Schnitt ausführen (DE-OS 34 08 943).

Es ist ferner eine Vorrichtung zum Einsatz bei Sägen oder dergleichen bekannt (DE-OS 35 11 244), mit der das Problem, daß die Anschlagkante und die Schneidkante bei unterschiedlichen Sagen verschiedene Maße haben, gelöst wird. Es besteht somit nicht die Gefahr, Werkstücke entweder dadurch zu verderben, daß beim ersten Sägen nicht die zuvor darauf angebrachte Anrißlinie getroffen wird, oder aber mehrere, zumindest zwei Schnitte ausgeführt werden müssen, um genau die Anrißlinie zu treffen.

Es ist ferner eine Gehrungslehre gemäß dem Oberbegriff des Hauptanspruchs bekannt (DE-PS 236 451), mit der es möglich ist, Leisten gleicher oder unterschiedlicher Breite so auf Gehrung zu schneiden, daß sich ihre Schnittflächen vollständig decken.

Dazu ist es bei unterschiedlich breiten Leisten notwendig, zunächst den Schnittwinkel zwischen den Längsachsen der Leisten und der Gehrungsebene zu berechnen, dann die Gehrungslehre mittels eines einer Skala, auf der die Winkelgrade angegeben sind, über der Sägeblattebene zu verstellen, dann die eine Leiste zu schneiden. Dasselbe muß mit der anderen Leiste wiederholt werden, was insoweit von Nachteil ist, daß der Gehrungsschnitt infolge falscher Winkelberechnung und/oder falscher Einstellung der Skala nicht zuverlässig genau gelingt.

Der Erfindung liegt daher die Aufgabe zugrunde, eine Gehrungslehre zu schaffen, bei welcher die Berechnung des Schnittwinkels entfallen und die Gehrungsebene genauer eingestellt werden kann.

Diese Aufgabe wird durch die im Anspruch 1 angegebenen kennzeichnenden Merkmale gelöst.

Besondere Ausführungsformen der Erfindung sind Gegenstand der Unteransprüche.

Die erfindungsgemäße Gehrungslehre hat den Vorteil, daß sie sich sowohl von einem Gewerbetreibenden als auch von einem Laien verwenden läßt, dem die Winkelberechnung bei unterschiedlich breiten Leisten nicht vertraut ist. Der Gewerbetreibende kann die erfindungsgemäße Gehrungslehre z. B. auf einem parallel verschiebbaren Sägetisch festspannen und der Laie an die Richtleiste einen Winkel anlegen, um die Gehrungslehre auf die zu verbindenden Leisten zu übertragen.

Durch die Erfindung ist es möglich, unterschiedlich breite Leisten auf Gehrung zu schneiden, ohne daß es einer Winkelberechnung bedarf. Dabei wird das Lot auf die Gehrungsebene durch die Richtleiste dargestellt, die zwischen den Anlageflächen in Bezug auf die unterschiedlichen Breiten der Leisten verstellbar ist. Nach dem Erzeugen des Gehrungsschnittes liegen die beiden Schnittflächen der Leisten nebeneinander in einer Ebene, während sie beim Stand der Technik deckungsgleich in der Gehrungsebene liegen.

Es ist zwar bekannt, eine schwenkbar gelagerte, verstellbare sowie mittels einer Fixiereinrichtung feststellbare Richtleiste zu verwenden (DE-AS 12 68 858), wobei die Fixiereinrichtung relativ zu den beiden Anlageflächen festlegbar ist. Bei dieser bekannten Vorrichtung handelt es sich aber um ein gattungsfremdes Meßgerät zum Messen von Winkeln.

Zweckmäßige Ausgestaltungen und Weiterbildungen der Erfindung sind in den Unteransprüchen gekennzeichnet.

Die Erfindung wird an Hand eines Ausführungsbeispieles und der Zeichnung im folgenden näher erläutert. Es zeigt
Die Erfindung wird anhand eines Ausführungsbeispieles und der Zeichnung im folgenden näher erläutert. Es zeigt:
- Figur 1: die Gehrungslehre in axionometrischer Darstellung,
- Figur 2: eine zweischenklige Richtleiste mit einer Fixiereinrichtung und Befestigungsmitteln,
- Figur 3: schematisch zwei auf Gehrung zusammengesetzte Leisten unterschiedlicher Breite in der Draufsicht,
- Figur 4: die Draufsicht auf eine Richtplatte ohne Richtleisten,
- Figur 5: die Draufsicht auf eine Richtplatte mit zwei Richtleisten und einer Meßleiste,
- Figur 6: die Draufsicht auf eine Richtplatte mit drei Richtleisten,
- Figur 7: die Lage der Leisten bezüglich der geraden Kante nach einem ersten Ausrichtverfahren,
- Figuren 8a und 8b: zwei Schritte eines zweiten Ausricht verfahrens zur Vorbereitung der Leisten,
- Figuren 9a 9b: zwei Schritte eines dritten Aus- und richtverfahrens, und
- Figur 10: einen Schnitt durch die Richtplatte und eine Meßleiste.

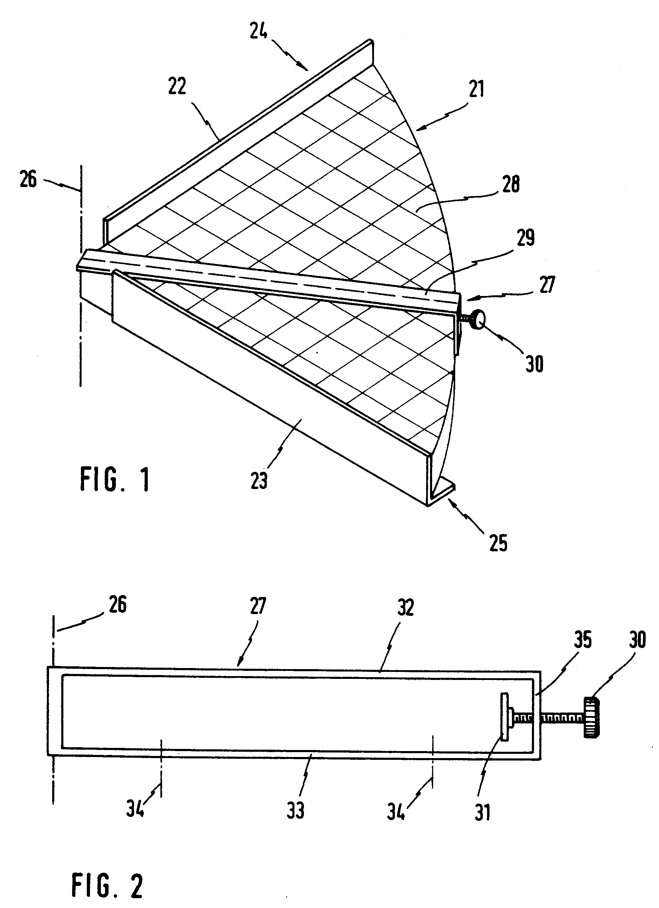

Die Gehrungslehre gemäß Fig. 1 weist eine Richtplatte 1 auf, die durch zwei Anlageflächen 22,23 begrenzt ist, die im rechten Winkel zueinander angeordnet sind. Die Anlageflächen 22,23 werden in zweckmäßiger aber nicht notwendiger Weise durch zwei L-förmige Anschlagschienen 24, 25 gebildet, die an der Richtplatte 21 in geeigneter Weise befestigt sind. Die Dicke der Anschlagschienen 24,25 sorgt für einen Abstand der Anschlagflächen 22, 23 gegenüber den Stirnflächen der Richtplatte 21, so daß es möglich ist, die Schwenkachse 26 einer Richtleiste 27 genau in die gedachte Schnittkante der durch die Anschlagschienen 24, 25 gebildeten Anlageflächen 22, 23 zu legen. Derselbe Effekt könnte dadurch erzielt werden, daß die Stirnflächen der Richtplatte 21 im Bereich der gedachten Schnittkante der Anlageflächen 22, 23 eine Ausnehmung oder einen Absatz aufweisen, so daß die Anlageflächen 22, 23 unmittelbar auch von den Stirnflächen der Richtplatte 21 gebildet werden können.

Auf der einen Oberfläche der Richtplatte 21 ist ein Raster 28 aufgetragen oder eingeritzt, dessen Linien parallel zu den Anlageflächen 22, 23 verlaufen und untereinander z.B. den Abstand von 1 cm aufweisen. Auf der anderen Oberfläche kann ebenfalls ein Raster 28 aufgetragen oder eingeritzt sein, dessen Linien einen Abstand von 1 Inch oder einer anderen Maßeinheit aufweisen. Es ist aber auch möglich, das Raster 28 nicht in die Richtplatte 21 einzuritzen oder darauf aufzutragen, sondern eine Folie, z.B. aus Kunststoff, auf die Richtplatte 21 aufzulegen, die dann gegen eine Folie mit einem Raster 28 eines anderen Maßsystems ausgetauscht werden kann. Selbstverständlich kann die Folie auch mit der Richtplatte 21 fest verbunden sein, z.B. durch Kleben.

An der gedachten Schnittkante der beiden Anlageflächen 22,23 ist eine Richtleiste 27 schwenkbar befestigt. Die Schwenkachse 26 der Richtleiste 27 ist senkrecht zur Ebene der Richtplatte 21 ausgerichtet und zugleich der Ursprung des das Raster 28 bildenden Koordinatensystems. Die Richtleiste 27 ist transparent, so daß durch sie hindurch das Raster 28 betrachtbar ist und ihre die Schwenkachse 26 schneidende Längsachse 29 ist auf oder in ihr dargestellt.

Mittels einer Fixiereinrichtung, die an dem freien Ende der Richtleiste 27 angeordnet ist und die eine Schraube 30 und eine Anpreßplatte 31 aufweist (Fig. 2), kann die Richtleiste 27 gegenüber der Richtplatte 21 den Erfordernissen entsprechend festgelegt werden.

Die in Fig. 2 dargestellte Richtleiste 27 weist zwei Schenkel 32, 33 auf, von denen der eine über der mit dem Raster 28 versehenen Oberfläche der Richtplatte 21 und von denen der andere an der Unterseite der Richtplatte 21 angeordnet ist. Der untere Schenkel 33 weist nur schematisch dargestellte Befestigungsmittel 34 auf, mittels welcher die Richtleiste 27,z.B. auf einem parallel verschiebbaren Sägetisch befestigbar ist. Selbstverständlich ist es auch möglich, das Sägeblatt zu verschieben statt den Sägetisch. Die beiden Schenkel 32, 33 sind untereinander an ihren einen Enden über die Schwenkachse 26 verbunden und an ihren anderen Enden durch einen Steg 35, in dem auch die Schraube 30 der Fixiereinrichtung in einer Gewindebohrung drehbar gelagert ist.

Wenn auf beiden Oberflächen der Richtplatte 21 Raster 28 unterschiedlicher Maßsysteme aufgetragen sind, ist es zweckmäßig in beiden Schenkeln 32, 33 der Richtleiste 21 Löcher oder Schlitze vorzusehen, die zur Aufnahme der Befestigungsmittel 34 geeignet sind. Die Richtleiste 27 muß dann nicht transparent sein, wenn entweder sich eine ihrer Längskanten mit der Schwenkachse 26 schneidet oder wenn in ihr die Längsachse 29 bezeichnende Schlitze angeordnet sind. Dabei können die Schlitze auch der Aufnahme der Befestigungsmittel 34 dienen.

Zur Vorbereitung des Gehrungsschnittes wird die Längsachse 29 oder die Längskante der Richtleiste 27 auf der Richtplatte 21 bis zu dem Punkt verschwenkt und mit diesem zur Deckung gebracht, der durch die beiden Breiten der zu bearbeitenden Leisten in dem Raster 28 restgelegt ist. Mittels der Fixiereinrichtung wird die Richtleiste 27 an der Richtplatte 21 festgelegt.

Dadurch ist der Schnittwinkel zwischen den Längsachsen der Leisten und der Gehrungsebene ohne Berechnung bestimmt. Dann werden die Leisten an die Anlageflächen 22, 23 angelegt und gegebenenfalls an der Richtplatte 21 fixiert. Entweder wird nun ein Winkel an die Richtleiste 27 angelegt und die Schnittebene auf die unterschiedlich breiten Leisten übertragen, oder, wenn die Richtleiste 27 auf einem Sägetisch befestigt ist, dieser auf das Säge- oder Fräswerkzeug hinzubewegt. Selbstverständlich wurde in diesem Fall die Richtplatte 21 unter der Richtleiste 27 verschwenkt und die Längsachse 29 der Richtleiste 27 senkrecht zur Bewegungsrichtung des Sägetisches ausgerichtet.

Das Raster 28 aber auch die Richtplatte 21 sind verzichtbare Bestandteile der erfindungsgemäßen Gehrungslehre. Die Richtleiste 27 kann nämlich auch dadurch in die richtige Position gebracht werden, daß an die einander zugewandten Seiten der Anlageflächen 22, 23 die zu bearbeitenden Leisten angelegt werden und die Richtleiste 27 unter oder über den Leisten bis zu der Stellung verschwenkt wird, in der sich die Längsachse 29 oder eine Längskante der Richtleiste 27 mit den sich berührenden Kanten der Leisten deckt. Dazu bedarf es somit keines Rasters 28. Aber auch die Richtplatte 21 ist nicht unbedingt erforderlich, wenn die Gehrungslehre zum Einrichten der Richtleiste 27 auf eine ebene Unterlage gelegt wird oder die einander zugewandten Seiten der Anlageflächen 22,23 so ausgebildet sind, daß darauf die zu bearbeitenden Leisten aufgelegt werden können.

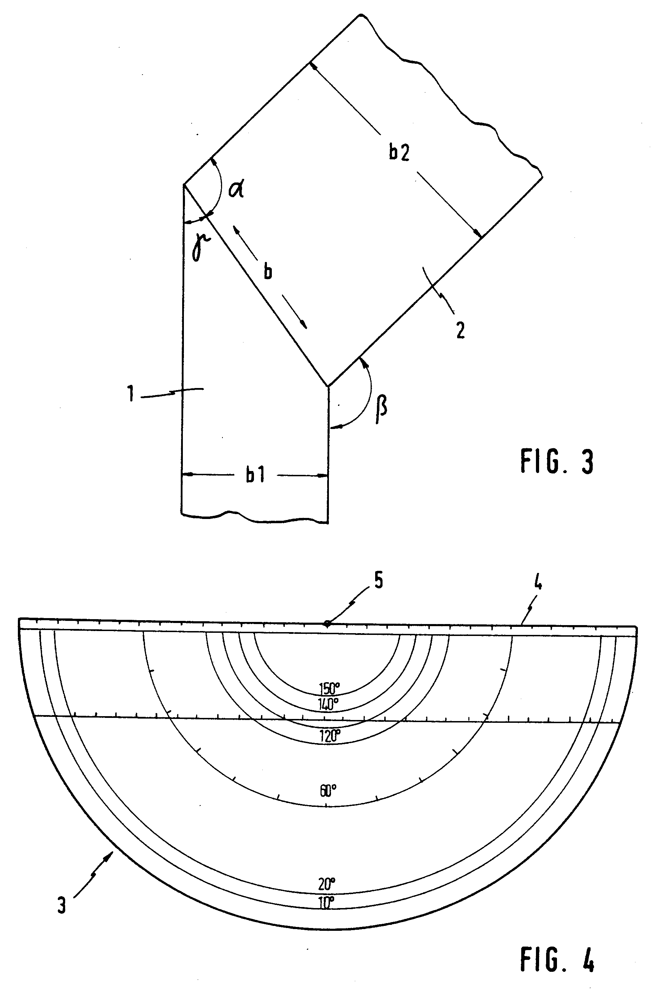

Figur 3 zeigt zwei unterschiedlich breite Leisten 1, 2, die auf Gehrung geschnitten und zusammengesetzt sind. Die beiden Leisten 1, 2 haben Breiten b1, b2 und schließen den Öffnungswinkel β ein. Die Gehrungswinkel sind mit α und γ bezeichnet. Die Breite der Gehrungsfläche ist mit b bezeichnet.

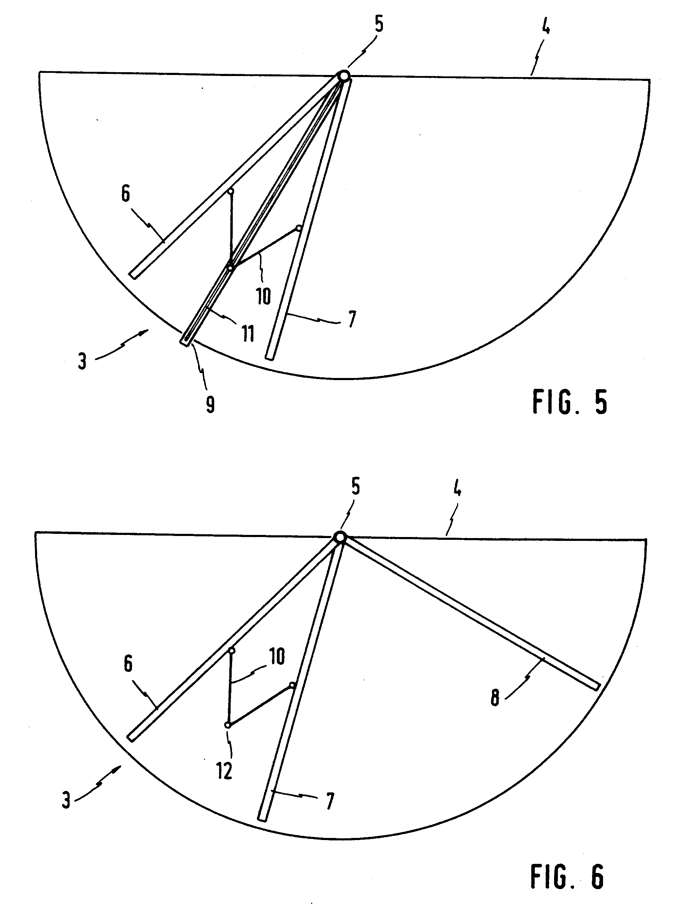

In Fig. 4 ist eine Richtplatte 3 dargestellt, die aus Holz, Metall oder Kunststoff bestehen kann. Auf dieser Richtplatte 3 ist eine Folie aufgeklebt, auf der konzentrische Halbkreise und eine Gerade dargestellt sind, wobei in der Figur nur exemplarisch einige Halbkreise wiedergegeben sind. An der geraden Kante 4 der Richtplatte 3 ist im Mittelpunkt der Halbkreise eine Achse 5 angeordnet, um welche zwei oder drei Richtleisten 6, 7, 8 und gegebenenfalls eine Meßleiste 9 unabhängig voneinander schwenkbar sind. Die Richtleisten 6, 7, 8 und die Meßleiste 9 sind in dieser Figur der Deutlichkeit wegen nicht dargestellt; dazu wird auf die Fig. 5 und 6 hingewiesen. An der geraden Kante 4 und auf der zu dieser parallelen Geraden ist jeweils ein Längenmaßstab aufgetragen. Einer der Halbkreise ist mit einer Gradskala versehen, die den Winkel zwischen den Richtleisten 6, 7, 8 sowie zwischen den Richtleisten 6, 7, 8 und der geraden Kante 4 angibt.

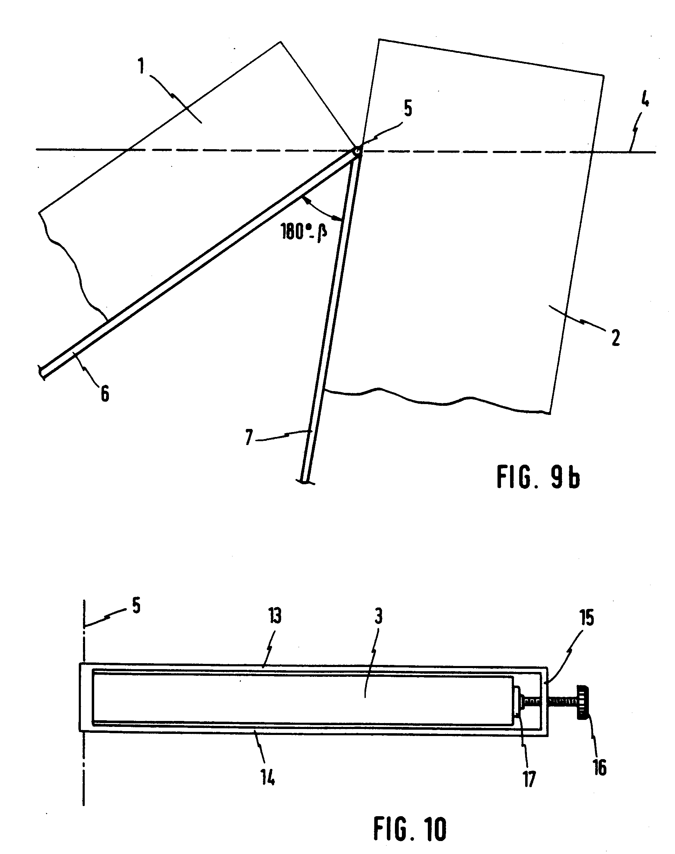

In den Fig. 5 und 6 ist in Ergänzung zur Fig. 4 die Richtplatte 3 mit zwei oder drei Richtleisten 6, 7, 8 dargestellt, wobei der Deutlichkeit wegen nunmehr die Linien nicht dargestellt sind. Bei dem Ausführungsbeispiel gemäß Fig. 5 sind in der Achse 5 zwei Richtleisten 6, 7 und eine Meßleiste 9 angeordnet. Auf der Meßleiste 9 ist eine Gradskala dargestellt, die in Verbindung mit einem scherenartigen Gestänge 10 den Winkel zwischen den beiden Richtleisten 6, 7 angibt. Außerdem weist die Meßleiste 9 einen Längsschlitz 11 auf. Das scherenartige Gestänge 10 ist mit seinen freien Enden jeweils an einer Richtleiste 6, 7 angelenkt, wobei unter "scherenartig" ein zweischenkliges Gebilde verstanden wird, dessen Schenkel durch ein Gelenk 12 miteinander verbunden sind. Dieses Gelenk 12 ist in dem Längsschlitz 11 in der Meßleiste 9 geführt und darin wahlweise festlegbar. Bei Anordnung der Meßleiste 9 sind die Halbkreise auf der Richtplatte 3, die nicht die Gradskala aufweisen, entbehrlich. Die Meßleiste 9 selbst (Fig. 10) ist zweischenklig ausgebildet, wobei die beiden Schenkel 13, 14 die Richtplatte 3 zwischen sich aufnehmen. Außerdem sind die beiden Schenkel 13, 14 an ihren freien Enden durch einen Steg 15 verbunden, der in einer Gewindebohrung eine Schraube 16 drehbar trägt. Mittels dieser Schraube 16 kann die Meßleiste 9 and der Richtplatte 3 wahlweise festgelegt werden. Zur Verteilung des Anpreßdruckes weist die Schraube 16 an ihrem freien Ende eine Anpreßplatte 17 auf, die in der Haltestellung der Meßleiste 9 an der Stirnfläche der Richtplatte 3 anliegt. Die Richtplatte 3 muß nicht einen halbkreisförmigen Rand aufweisen, wie in den Figuren dargestellt, sondern sie kann auch rechteckig oder quadratisch oder allgemein vieleckig ausgebildet sein.

Die Richtplatte 3 mit zwei Richtleisten 6, 7 eignet sich besonders für zwei Ausrichtverfahren, auf die weiter unten noch näher eingegangen wird. Für ein drittes Ausrichtverfahren eignet sich insbesondere die in Fig. 6 dargestellte Richtplatte 3 mit drei Richtleisten 6, 7, 8. Zwei Richtleisten 6, 7 sind auch bei diesem Ausführungsbeispiel mit dem Gestänge 10 verbunden, bei dem in diesem Fall das gemeinsame Gelenk 12 gesperrt werden kann. Die dritte Richtleiste 8 läßt sich unter den anderen Richtleisten 6, 7 hindurch oder über diese hinweg verschwenken. Die drei Richtleisten 6, 7, 8 sind jede für sich oder alle drei gemeinsam im Bereich der Achse 5 an der Richtplatte 3 wahlweise festlegbar. Dazu können eine oder mehrere, nicht näher dargestellte Fixiereinrichtungen vorgesehen sein.

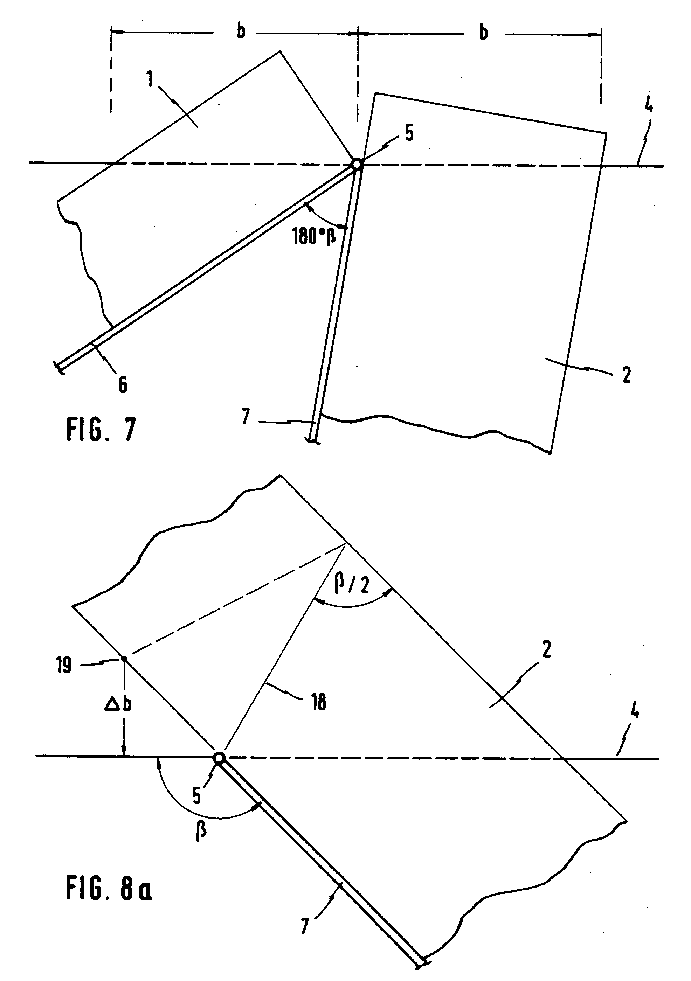

Im folgenden sollen anhand der Fig. 7 bis 9 die drei Ausrichtverfahren beschrieben werden, mittels welcher die beiden zu bearbeitenden Leisten 1, 2 so gegenüber der geraden Kante 4 ausgerichtet werden, daß die Leisten 1, 2 einzeln oder gemeinsam mit dem erforderlichen Gehrungsschnitt bearbeitet werden können. Dies kann entweder dadurch erfolgen, daß ein Sägeblatt oder ein Fräswerkzeug entlang der geraden Kante 4 durch die Leisten 1, 2 hindurchgeführt wird, oder daß die Richtplatte 3 auf ein Sägeblatt oder ein Fräswerkzeug parallel zur geraden Kante zubewegt wird, oder daß die gerade Kante 4 auf die Leisten 1, 2 übertragen wird und der Gehrungsschnitt mittels eines Werkzeuges und per Hand ausgeführt wird.

Beim ersten Ausrichtverfahren (Fig. 7) wird so vorgegangen, daß zwei Richtleisten 6, 7 so gegeneinander verschwenkt und festgelegt werden, daß sie einen Winkel von 180° abzüglich dem Öffnungswinkel β einschließen. Daraufhin werden die Leisten 1, 2 an die Richtleisten 6, 7 angelegt und mit diesen solange verschwenkt, bis die an der geraden Kante 4 oder auf der Geraden überdeckte Strecke unter der einen Leiste 1, 2 gleich der überdeckten Strecke unter der anderen Leiste 1, 2 ist. Sobald sich diese Position eingestellt hat, werden die Richtleisten 6, 7 gegenüber der Richtplatte 3 fixiert und der Gehrungsschnitt kann ausgeführt werden.

Die Messung der Streckenlänge kann dadurch erleichtert werden, daß die zur geraden Kante 4 parallele Gerade durch eine Lichtleiste oder eine elektrische Sensorenleiste, die beide jeweils in die Richtplatte 3 eingelassen sind, dargestellt wird.

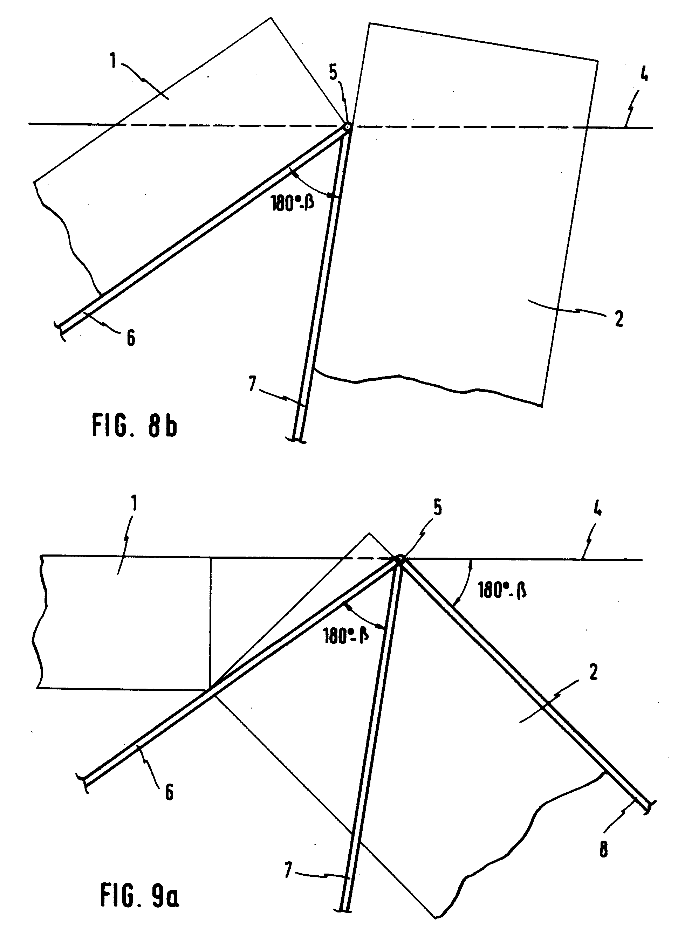

Bei dem zweiten Ausrichtverfahren (Fig. 8a, 8b) wird zunächst auf der breiteren Leiste 2 ein Riß 18 aufgetragen, der in der Projektion auf die Ebene der Richtplatte 3 die Längsachse der Leiste 2 unter dem halben Öffnungswinkel β schneidet. Daraufhin wird die erste Richtleiste 6 so gegenüber der geraden Kante 4 oder Geraden ausgerichtet, daß sie mit der geraden Kante 4 den Öffnungswinkel β einschließt. An die erste Richtleiste 6 wird dann die Leiste 2 in der Position angelegt, daß der Riß 18 die Achse 5 schneidet. Senkrecht von der geraden Kante 4 bzw. der Geraden aus wird an der Leiste 2 der Punkt 19 markiert, der von der geraden Kante 4 bzw. der Geraden einen Abstand aufweist, der bei einem stumpfen Öffnungswinkel β gleich dem Breitenunterschied der Leisten 1, 2 ist und der bei einem spitzen Öffnungswinkel β gleich der Breite b1 der Leiste 1 ist. Bei einem Öffnungswinkel β von 90° kann entweder die Breite b1 oder der Breitenunterschied angetragen werden. Die Verbindung dieses Punktes 19 mit dem auf der gegenüberliegenden Längskante dargestellten Endpunkt des Risses 18 ergibt die Ebene des Gehrungsschnittes für die Leiste 2 bzw. den Gehrungswinkel.

Die zweite Richtleiste 7 wird nun gegenüber der ersten Richtleiste 6 so eingerichtet, daß sie einen Winkel einschließen, der 180° abzüglich dem Öffnungswinkel β beträgt. Beide Richtleisten 6, 7 werden relativ zueinander fixiert und dann die Leiste 2 mit der aufgetragenen und die Gehrungsebene darstellenden Schnittlinie so zurechtgelegt, bis sich diese mit der geraden Kante 4 oder der Geraden deckt. In dieser Position werden die beiden Richtleisten 6, 7 gegenüber der Richtplatte 3 festgelegt und damit ist auch die Gehrungsebene bzw. der Gehrungswinkel α, γ für die andere Leiste 1, die an die zweite Richtleiste 7 angelegt wurde, festgelegt.

Für das dritte Ausrichtverfahren (Fig. 9a, 9b) wird zweckmäßigerweise eine Richtplatte 3 verwendet, die drei Richtleisten 6, 7, 8 aufweist. Zunächst wird die erste Richtleiste 8 gegenüber der geraden Kante oder der Geraden so eingerichtet, daß sie mit dieser einen Winkel einschließt, der gleich 180° abzüglich dem Öffnungswinkel β ist. Die zweite und dritte Richtleiste 6, 7 werden so relativ zueinander angeordnet und festgelegt, daß sie den gleichen Winkel einschließen. Daraufhin wird die eine Leiste 2 an die erste Richtleiste 8 und die andere Leiste 1 mit ihrer Längskante an die gerade Kante 4 angelegt und die beiden Leisten 1, 2 relativ zueinander solange verschoben, bis sich ihre Ecken berühren und ihre Stirnflächen einander zugewandt sind. Die zweite Richtleiste 6 wird nun (zusammen mit der dritten Richtleiste 7) solange verschwenkt, bis sie sich mit dem Berührungspunkt der beiden Leisten 1, 2 deckt. Dann wird sie gegenüber der Richtplatte 3 festgelegt. Anschließend werden die beiden Leisten 1, 2 an die zweite und dritte Richtleiste 6, 7 angelegt und der Gehrungsschnitt ausgeführt.

## Patentansprüche (Patentansprüche für folgende(n) Vertragsstaat(en): AT, BE, CH, FR, GB, IT, LI, LU, NL, SE)

1. Gehrungslehre zur Befestigung an einer Säge oder Fräse zur Erstellung einer Gehrung für zu sägende bzw. zufräsende Leisten, mit zwei Anlageflächen (22, 23), deren Flächennormale zwischen sich einen rechten Winkel einschließen, **gekennzeichnet durch** eine Richtleiste (27), die relativ zu den Anlageflächen (22, 23) schwenkbar gelagert zwischen diesen in Bezug auf die unterschiedlichen Breiten der Leisten verstellbar sowie mittels einer Fixiereinrichtung relativ zu den beiden Anlageflächen (22, 23) wahlweise so festlegbar ist, daß sie das Lot auf die Säge- bzw. Fräsebene darstellt.

2. Gehrungslehre nach Anspruch 1, dadurch gekennzeichnet, daß die Anlageflächen (22, 23) durch Anlageschienen (24, 25) oder durch die Stirnflächen einer Richtplatte (21) oder durch mit einer Richtplatte (21) verbundene Anlageschienen (24, 25) gebildet sind.

3. Gehrungslehre nach Anspruch 2, dadurch gekennzeichnet, daß auf der einen oder beiden Oberflächen der Richtplatte (21) ein Raster (28) aufgetragen ist, das ein Koordinatensystem darstellt, dessen Achsen parallel zu den Anlageflächen (22, 23) sind und dessen Ursprung in der Schwenkachse (26) liegt, wobei das Raster (28) durch Linien oder durch Punkte auf einer Folie dargestellt ist, die auf die Oberfläche der Richtplatte (21) aufgelegt oder aufgeklebt ist oder die Linien oder Punkte in die Oberfläche der Richtplatte (21) eingeritzt sind.

4. Gehrungslehre nach einem der Ansprüche 2 bis 3, dadurch gekennzeichnet, daß die Richtleiste (27) einen einzigen Schenkel (27) oder zwei Schenkel (32, 33) aufweist, von denen der eine sich entlang der einen und der andere sich entlang der anderen Oberfläche der Richtplatte (21) erstreckt.

5. Gehrungslehre nach einem der Ansprüche 1 bis 4, dadurch gekennzeichnet, daß die Richtleiste (27) transparent ist und ihre Längsachse (29) in oder auf ihr dargestellt ist, oder daß die Richtleiste (27) über ihre gesamte Länge einen oder mehrere Schlitze aufweist, deren Achse die Schwenkachse (26) der Richtleiste (27) schneidet.

6. Gehrungslehre nach einem der Ansprüche 2 bis 5, dadurch gekennzeichnet, daß die Fixiereinrichtung eine am freien Ende der Richtleiste (27) befestigte Schraube (30) aufweist, die an ihrem Ende eine Anpreßplatte (31) hält, die in Haltestellung an der Richtplatte (21) anliegend angepreßt ist.

7. Gehrungslehre nach Anspruch 6, dadurch gekennzeichnet, daß die Achse der Schraube (30) parallel zur Ebene der Richtplatte (21) ausgerichtet ist und daß die Anpreßplatte (31) an einer Stirnfläche der Richtplatte (21) anliegt.

8. Gehrungslehre nach einem der Ansprüche 1 bis 7, dadurch gekennzeichnet, daß die Richtleiste (27) Befestigungsmittel (34) aufweist, mittels derer sie auf einer Unterlage befestigbar ist.

9. Gehrungslehre zur Befestigung an einer Säge oder Fräse zur Erstellung einer Gehrung für zu sägende bzw. zu fräsende Leisten mit um eine gemeinsame Achse schwenkbaren und wahlweise festlegbaren Richtleisten, dadurch gekennzeichnet, daß sie eine durch wenigstens eine gerade Kante (4) begrenzte Richtplatte (3) aufweist, wobei die Achse (5) senkrecht zur Ebene der Richtplatte (3) ausgerichtet ist, daß die Richtleisten (6, 7, 8) unabhängig voneinander schwenkbar und mittels wenigstens einer Fixiereinrichtung relativ zur Richtplatte (3) sowie relativ zueinander festlegbar sind und daß die die Säge- bzw. Fräsebene darstellende gerade Kante (4) bei festgelegten Richtleisten (6, 7, 8) außerhalb des durch die Richtleisten (6, 7, 8) gebildeten Sektors liegt.

10. Gehrungslehre nach Anspruch 9, dadurch gekennzeichnet, daß zwei Richtleisten (6, 7) oder drei Richtleisten (6, 7, 8) vorgesehen sind, von denen die eine unter den beiden anderen hindurch oder über die beiden anderen hinweg verschwenkbar ist.

11. Gehrungslehre nach Anspruch 9 oder 10, dadurch gekennzeichnet, daß die Richtleisten (6, 7, 8) auf ihrer Oberfläche jeweils wenigstens zwei Anschläge aufweisen, die entlang einer die Achse (5) schneidenden geraden Linie angeordnet sind.

12. Gehrungslehre nach einem der Ansprüche 9 bis 11, dadurch gekennzeichnet, daß zwei Richtleisten (6, 7) mittels eines scherenartigen Gestänges (10) verbunden sind, dessen freie Enden an den Richtleisten (6, 7) angelenkt sind.

13. Gehrungslehre nach Anspruch 12, dadurch gekennzeichnet, daß in der Achse (5) eine Messleiste (9) schwenkbar gelagert ist, auf der eine Skala dargestellt ist, die in Verbindung mit dem Gestänge (10) den Öffnungswinkel (β) zwischen den beiden Richtleisten (6, 7) angibt und daß das Gestänge (10) an der Messleiste (9) wahlweise festlegbar ist.

14. Gehrungslehre nach Anspruch 12, dadurch gekennzeichnet, daß auf der Richtplatte (3) zur Achse (5) konzentrische Halbkreise dargestellt sind, die in Verbindung mit dem Gestänge (10) den Öffnungswinkel (β) zwischen den beiden Richtleisten (6, 7) angeben, und daß das Gestänge (10) gegenüber der Richtplatte (3) wahlweise festlegbar ist.

15. Gehrungslehre nach Anspruch 13, dadurch gekennzeichnet, daß die Messleiste (9) zweischenklig ausgebildet ist, wobei die beiden Schenkel (13, 14) die Richtplatte (3) zwischen sich aufnehmen, und daß die freien Enden der Schenkel (13, 14) mittels eines Steges (15) verbunden sind, in welchem in einer Gewindebohrung eine Schraube (16) drehbar gelagert ist, mittels welcher die Messleiste (9) gegenüber der Richtplatte (3) festlegbar ist.

16. Gehrungslehre nach Anspruch 15, dadurch gekennzeichnet, daß die Schraube (16) an ihrem der Richtplatte (3) zugewandten Ende eine Anpreßplatte (17) trägt.

17. Gehrungslehre nach einem der Ansprüche 9 bis 16, dadurch gekennzeichnet, daß an der geraden Kante (4) der Richtplatte (3) und/oder parallel zu dieser eine Gerade dargestellt ist, die mit einem Maßstab versehen ist.

18. Gehrungslehre nach Anspruch 17, dadurch gekennzeichnet, daß auf der Oberfläche der Richtplatte (3) ein zur Achse (5) konzentrischer Halbkreis dargestellt ist, der mit einer Gradeinteilung versehen ist, und daß die Geraden und/oder die Halbkreise in die Oberfläche der Richtplatte (3) eingeritzt oder auf ihr aufgetragen und/oder auf einer auf der Richtplatte aufgeklebten Folie dargestellt ist.

19. Gehrungslehre nach Anspruch 17, dadurch gekennzeichnet, daß die Gerade durch eine Lichtleiste oder eine elektrische Sensorleiste dargestellt ist, die in die Richtplatte (3) eingelassen ist.

20. Gehrungslehre nach einem der Ansprüche 9 bis 19, dadurch gekennzeichnet, daß eine Fixiereinrichtung im Bereich der Achse (5) angeordnet ist, mittels welcher die Richtleisten (6, 7, 8) und die Richtplatte (3) gegeneinander verspannbar sind.

21. Gehrungslehre nach einem der Ansprüche 9 bis 20, dadurch gekennzeichnet, daß die Achse (5) an der geraden Kante (4) oder in der dazu parallelen Geraden angeordnet ist.

22. Gehrungslehre nach einem der Ansprüche 13 bis 21, dadurch gekennzeichnet, daß die Meßleiste (9) einen Längsschlitz (11) aufweist, in dem das Gelenk (12) des Gestänges (10) geführt und wahlweise festlegbar ist.

23. Gehrungslehre nach einem der Ansprüche 2 bis 22, dadurch gekennzeichnet, daß die Richtplatte (3) aus Holz, Metall oder Kunststoff ist.

## Patentansprüche (Patentansprüche für folgende(n) Vertragsstaat(en): DE)

1. Gehrungslehre zur Befestigung an einer Säge oder Fräse zur Erstellung einer Gehrung für zu sägende bzw. zu fräsende Leisten mit um eine gemeinsame Achse schwenkbaren und wahlweise festlegbaren Richtleisten, dadurch gekennzeichnet, daß sie eine durch wenigstens eine gerade Kante (4) begrenzte Richtplatte (3) aufweist, wobei die Achse (5) senkrecht zur Ebene der Richtplatte (3) ausgerichtet ist, daß die Richtleisten (6, 7, 8) unabhängig voneinander schwenkbar und mittels wenigstens einer Fixiereinrichtung relativ zur Richtplatte (3) sowie relativ zueinander festlegbar sind und daß die die Säge- bzw. Fräsebene darstellende gerade Kante (4) bei festgelegten Richtleisten (6, 7, 8) außerhalb des durch die Richtleisten (6, 7, 8) gebildeten Sektors liegt.

2. Gehrungslehre nach Anspruch 9, dadurch gekennzeichnet, daß zwei Richtleisten (6, 7) oder drei Richtleisten (6, 7, 8) vorgesehen sind, von denen die eine unter den beiden anderen hindurch oder über die beiden anderen hinweg verschwenkbar ist.

3. Gehrungslehre nach Anspruch 9 oder 10, dadurch gekennzeichnet, daß die Richtleisten (6, 7, 8) auf ihrer Oberfläche jeweils wenigstens zwei Anschläge aufweisen, die entlang einer die Achse (5) schneidenden geraden Linie angeordnet sind.

4. Gehrungslehre nach einem der Ansprüche 9 bis 11, dadurch gekennzeichnet, daß zwei Richtleisten (6, 7) mittels eines scherenartigen Gestänges (10) verbunden sind, dessen freie Enden an den Richtleisten (6, 7) angelenkt sind.

5. Gehrungslehre nach Anspruch 12, dadurch gekennzeichnet, daß in der Achse (5) eine Messleiste (9) schwenkbar gelagert ist, auf der eine Skala dargestellt ist, die in Verbindung mit dem Gestänge (10) den Öffnungswinkel (β) zwischen den beiden Richtleisten (6, 7) angibt und daß das Gestänge (10) an der Messleiste (9) wahlweise festlegbar ist.

6. Gehrungslehre nach Anspruch 12, dadurch gekennzeichnet, daß auf der Richtplatte (3) zur Achse (5) konzentrische Halbkreise dargestellt sind, die in Verbindung mit dem Gestänge (10) den Öffnungswinkel (β) zwischen den beiden Richtleisten (6, 7) angeben, und daß das Gestänge (10) gegenüber der Richtplatte (3) wahlweise festlegbar ist.

7. Gehrungslehre nach Anspruch 13, dadurch gekennzeichnet, daß die Messleiste (9) zweischenklig ausgebildet ist, wobei die beiden Schenkel (13, 14) die Richtplatte (3) zwischen sich aufnehmen, und daß die freien Enden der Schenkel (13, 14) mittels eines Steges (15) verbunden sind, in welchem in einer Gewindebohrung eine Schraube (16) drehbar gelagert ist, mittels welcher die Messleiste (9) gegenüber der Richtplatte (3) festlegbar ist.

8. Gehrungslehre nach Anspruch 15, dadurch gekennzeichnet, daß die Schraube (16) an ihrem der Richtplatte (3) zugewandten Ende eine Anpreßplatte (17) trägt.

9. Gehrungslehre nach einem der Ansprüche 9 bis 16, dadurch gekennzeichnet, daß an der geraden Kante (4) der Richtplatte (3) und/oder parallel zu dieser eine Gerade dargestellt ist, die mit einem Maßstab versehen ist.

10. Gehrungslehre nach Anspruch 17, dadurch gekennzeichnet, daß auf der Oberfläche der Richtplatte (3) ein zur Achse (5) konzentrischer Halbkreis dargestellt ist, der mit einer Gradeinteilung versehen ist, und daß die Geraden und/oder die Halbkreise in die Oberfläche der Richtplatte (3) eingeritzt oder auf ihr aufgetragen und/oder auf einer auf der Richtplatte aufgeklebten Folie dargestellt ist.

11. Gehrungslehre nach Anspruch 17, dadurch gekennzeichnet, daß die Gerade durch eine Lichtleiste oder eine elektrische Sensorleiste dargestellt ist, die in die Richtplatte (3) eingelassen ist.

12. Gehrungslehre nach einem der Ansprüche 9 bis 19, dadurch gekennzeichnet, daß eine Fixiereinrichtung im Bereich der Achse (5) angeordnet ist, mittels welcher die Richtleisten (6, 7, 8) und die Richtplatte (3) gegeneinander verspannbar sind.

13. Gehrungslehre nach einem der Ansprüche 9 bis 20, dadurch gekennzeichnet, daß die Achse (5) an der geraden Kante (4) oder in der dazu parallelen Geraden angeordnet ist.

14. Gehrungslehre nach einem der Ansprüche 13 bis 21 , dadurch gekennzeichnet, daß die Meßleiste (9) einen Längsschlitz (11) aufweist, in dem das Gelenk (12) des Gestänges (10) geführt und wahlweise festlegbar ist.

15. Gehrungslehre nach einem der Ansprüche 2 bis 22, dadurch gekennzeichnet, daß die Richtplatte (3) aus Holz, Metall oder Kunststoff ist.

## Claims (Claims for the following Contracting State(s): AT, BE, CH, FR, GB, IT, LI, LU, NL, SE)

1. Mitre gauge for attachment to a saw or milling tool for mitering battens to be sawn or milled, having two abutment strips (22, 23), the surface normals of which form a right angle, characterised by a guide bar (27) which is arranged so as to swivel between and relative to said abutment strips (22, 23), is adjustable with respect to different widths of batten and may also be selectively locked into position in relation to said two abutment strips (22, 23) by means of a positioning means, so that it represents the plumb line onto the sawing or milling plane.

2. Mitre gauge according to Claim 1, characterised in that said abutment strips (22, 23) are formed by abutment rails (24, 25) or by the faces of a guide plate (21) or by abutment rails (24, 25) connected to a guide plate (21).

3. Mitre gauge according to Claim 1, characterised in that one or both surfaces of said guide plate (21) is provided with a grid pattern (28) which represents a coordinate system, the axes of which are parallel to said abutment strips (22, 23) and the origin of which lies in the swivelling axis (26), said grid pattern (28) being represented by lines or dots on a foil, which is laid on or adhered to the surface of said guide plate (21) or the lines or dots are punched into the surface of said guide plate (21).

4. Mitre gauge according to one of Claims 2 or 3, characterised in that the guide bar (27) has a single leg (27) or two legs (32, 33), one of which extending along one face of said guide plate (21) and the other extending along the other face.

5. Mitre gauge according to one of Claims 1 to 4, characterised in that said guide bar (27) is transparent and its longitudinal axis (29) is depicted in or on it, or that said guide bar (27) has one or several slots over its entire length, the axis of which intersects the swivelling axis (26) of said guide bar (27).

6. Mitre gauge according to one of Claims 2 to 5, characterised in that the positioning means has a secured bolt (30) on the free end of said guide bar (27) to hold a clamping disc (31) at its end which is clamped against said guide plate (21) when locked in position.

7. Mitre gauge according to Claim 6, characterised in that the axis of said bolt (30) is positioned parallel to the plane of said guide plate (21) and that said clamping disc (31) abuts a face of said guide plate (21).

8. Mitre gauge according to Claims 1 to 7, characterised in that said guide bar (27) has fasteners (34) to secure it to a base.

9. Mitre gauge for attachment to a saw or milling tool for mitering battens to be sawn or milled, having guide bars which may swivel around a common axis and may be selectively locked in position, characterized in that they have a guide plate (3) defined by at least one straight edge (4), the axis point (5) being aligned vertically to the plane of said guide plate (3), that said guide bars (6, 7, 8) are arranged so as to swivel independently and may be locked in position in relation to said guide plate (3) and relative to one another by means of at least one positioning means, and that said straight edge (4) representing the sawing or milling plane lies outside the sector formed by said guide bars (6, 7, 8) where said guide bars (6, 7, 8) have been locked in position.

10. Mitre gauge according to Claim 9, characterised in that two guide bars (6, 7) or three guide bars (6, 7, 8) are provided, one of which may be swivelled past the two others either underneath or over said other two.

11. Mitre gauge according to Claim 9 or 10, characterised in that said guide bars (6, 7, 8) each have at least two stops on their surface which are arranged along a straight line intersecting the axis point (5).

12. Mitre gauge according to one of Claims 9 to 11, characterised in that two guide bars (6, 7) are connected by means of a scissor-like arrangement (10), the free ends of which are hinged to said guide bars (6, 7).

13. Mitre gauge according to Claim 12, characterised in that a graduated bar (9) is mounted so as to swivel around the axis point (5) said graduated bar having a scale on it which indicates the angle of opening (β) between the two guide bars (6, 7) in conjunction with said scissor-like arrangement (10), and that said scissor-like arrangement (10) may be selectively fastened to said graduated bar (9).

14. Mitre gauge according to Claim 12, characterised in that semi-circles concentric to the axis point (5) are represented on the guide plate (3) which indicate the angle of opening (β) between the two guide bars (6, 7) in conjunction with said scissor-like arrangement (10), and that said scissor-like arrangement (10) may be selectively fastened to said graduated bar (9).

15. Mitre gauge according to Claim 13, characterised in that said graduated bar (9) is of twin legged design, said two legs (13, 14) accommodating said guide plate (3) between them, and that the free ends of said legs (13, 14) are connected by way of a frame (15) in which a bolt (16) is arranged so as to be able to turn in a threaded hole, the purpose of said bolt being to lock said graduated bar (9) in position in relation to said guide plate (3).

16. Mitre gauge according to Claim 15, characterised in that said bolt (16) has a clamping disc (17) at its end facing said guide plate (3).

17. Mitre gauge according to one of Claims 9 to 16, characterised in that a graduated straight line is depicted on the straight edge (4) of said guide plate (3) and/or parallel to same.

18. Mitre gauge according to Claim 17, characterised in that a graduated semi-circle concentric to the axis point (5) is depicted on the surface of said guide plate, and that the straight lines and/or the semi-circles are punched into the surface of said guide plate (3) or laid on this and/or depicted on a foil adhered to said guide plate.

19. Mitre gauge according to Claim 17, characterised in that the straight line is depicted by way of a light bar or an electric sensor bar which is embedded in said guide plate (3).

20. Mitre gauge according to one of Claims 9 to 19, characterised in that a positioning means is arranged in the area of the axis point (5) by means of which said guide bars (6, 7, 8) and said guide plate (3) may be braced against one another.

21. Mitre gauge according to one of Claims 9 to 19, characterised in that said axis point (5) is arranged on the straight edge (4) or in the straight lines parallel thereto.

22. Mitre gauge according to one of Claims 13 to 21, characterised in that said graduated bar (9) has a longitudinal slot (11) in which the hinge (12) of said scissor-like arrangement (10) is disposed and may be selectively fastened.

23. Mitre gauge according to one of Claims 2 to 22, characterised in that said guide plate (3) is made of wood, metal or plastic.

## Claims (Claims for the following Contracting State(s): DE)

1. Mitre gauge for attachment to a saw or milling tool for mitering battens to be sawn or milled, having guide bars which may swivel around a common axis and may be selectively locked in position, characterised in that they have a guide plate (3) defined by at least one straight edge (4), the axis point (5) being aligned vertically to the plane of said guide plate (3), that said guide bars (6, 7, 8) are arranged so as to swivel independently and may be locked in position in relation to said guide plate (3) and relative to one another by means of at least one positioning means, and that said straight edge (4) representing the sawing or milling plane lies outside the sector formed by said guide bars (6, 7, 8) where said guide bars (6, 7, 8) have been locked in position.

2. Mitre gauge according to Claim 1, characterised in that two guide bars (6, 7) or three guide bars (6, 7, 8) are provided, one of which may be swivelled past the two others either underneath or over said other two.

3. Mitre gauge according to Claim 1 or 2, characterised in that said guide bars (6, 7, 8) each have at least two stops on their surface which are arranged along a straight line intersecting the axis point (5).

4. Mitre gauge according to one of Claims 1 to 3, characterised in that two guide bars (6, 7) are connected by means of a scissor-like arrangement (10), the free ends of which are hinged to said guide bars (6, 7).

5. Mitre gauge according to Claim 4, characterised in that a graduated bar (9) is mounted so as to swivel around the axis point (5) said graduated bar having a scale on it which indicates the angle of opening (β) between the two guide bars (6, 7) in conjunction with said scissor-like arrangement (10), and that said scissor-like arrangement (10) may be selectively fastened to said graduated bar (9).

6. Mitre gauge according to Claim 4, characterised in that semi-circles concentric to the axis point (5) are represented on the guide plate (3) which indicate the angle of opening (β) between the two guide bars (6, 7) in conjunction with said scissor-like arrangement (10), and that said scissor-like arrangement (10) may be selectively fastened to said graduated bar (9).

7. Mitre gauge according to Claim 5, characterised in that said graduated bar (9) is of twin legged design, said two legs (13, 14) accommodating said guide plate (3) between them, and that the free ends of said legs (13, 14) are connected by way of a frame (15) in which a bolt (16) is arranged so as to be able to turn in a threaded hole, the purpose of said bolt being to lock said graduated bar (9) in position in relation to said guide plate (3).

8. Mitre gauge according to Claim 7, characterised in that said bolt (16) has a clamping disc (17) at its end facing said guide plate (3).

9. Mitre gauge according to one of Claims 1 to 8, characterised in that a graduated straight line is depicted on the straight edge (4) of said guide plate (3) and/or parallel to same.

10. Mitre gauge according to Claim 9, characterised in that a graduated semi-circle concentric to the axis point (5) is depicted on the surface of said guide plate, and that the straight lines and/or the semi-circles are punched into the surface of said guide plate (3) or laid on this and/or depicted on a foil adhered to said guide plate.

11. Mitre gauge according to Claim 9, characterised in that the straight line is depicted by way of a light bar or an electric sensor bar which is embedded in said guide plate (3).

12. Mitre gauge according to one of Claims 1 to 11, characterised in that a positioning means is arranged in the area of the axis point (5) by means of which said guide bars (6, 7, 8) and said guide plate (3) may be braced against one another.

13. Mitre gauge according to one of Claims 1 to 12, characterised in that said axis point (5) is arranged on the straight edge (4) or in the straight lines parallel thereto.

14. Mitre gauge according to one of Claims 5 to 13, characterised in that said graduated bar (9) has a longitudinal slot (11) in which the hinge (12) of said scissor-like arrangement (10) is disposed and may be selectively fastened.

15. Mitre gauge according to one of Claims 1 to 14, characterised in that said guide plate (3) is made of wood, metal or plastic.

## Revendications (Revendications pour l'(les) Etat(s) contractant(s) suivant(s): AT, BE, CH, FR, GB, IT, LI, LU, NL, SE)

1. Calibre d'onglet pour fixation sur une scie ou sur une fraiseuse destiné à réaliser un onglet pour des lattes à scier ou à fraiser, comportant deux faces d'appui (22, 23) dont les perpendiculaires planes forment entre elles un angle droit, caractérisé par la présence d'une baguette correctrice (27), laquelle est située de manière pivotante entre ses deux faces, est réglable par rapport aux largeurs différentes des lattes et peut être fixée si on la souhaite, au moyen d'un dispositif de fixation, par rapport aux deux faces d'appui (22, 23) de telle sorte que ladite baguette (25) constitue la perpendiculaire du plan de sciage ou de fraisage.

2. Calibre d'onglet selon la revendication 1, caractérisé par le fait que les faces d'appui (22, 23) sont constituées par des rails d'appui (24, 25) ou par des faces frontales d'une plaque de correction (21) ou encore par des rails d'appui (24, 25) reliés à une plaque de correction (21).

3. Calibre à onglet selon la revendication 2, caractérisé par le fait que sur l'une ou sur les deux surfaces de la plaque (21) est tracés une grille (28) qui constitue un système de coordonnée dont les axes sont situés parallèlement aux faces d'appui (22, 23) et dont l'origine se situe dans l'axe de basculement (26), ladite grille (28) étant constituée par des lignes ou des points tracés sur un film, lequel est posé ou collé sur la surface de la plaque (21), ou par des lignes ou des points gravés dans la surface de ladite plaque (21).

4. Calibre d'onglet selon l'une des revendications 2 à 3, caractérisé par le fait que la baguette de correction (27) présente une seule branche (27) ou deux branches (32, 33) dont l'une s'étend le long de l'une des surfaces, et l'autre le long de l'autre surface de la plaque 21.

5. Calibre d'onglet selon l'une des revendications 1 à 4, caractérisé par le fait que la baguette (27) est transparente et que son axe longitudinal (29) est représenté à l'intérieur ou sur elle, ou que ladite baguette (27) présente sur toute sa longueur une ou plusieurs fentes dont l'axe coupe l'axe de pivotement (26) de la baguette (27).

6. Calibre d'onglet selon l'une des revendications 2 à 5, caractérisé par le fait que le dispositif de fixation présente, fixée sur l'extrémité libre de la baguette (27), une vis (30) qui maintient sur son extrémité une plaque de serrage (31) laquelle, en position d'arrêt, est serrée de manière à venir s'appliquer sur la plaque (21).

7. Calibre d'onglet selon la revendication 6, caractérisé par le fait que l'axe de la vis (30) est orienté parallèlement au plan de la plaque (21) et que la plaque de serrage (31) s'applique contre une face frontale de la plaque 21.

8. Calibre d'onglet selon l'une des revendications 1 à 7, caractérisé par le fait que la baguette de correction (27) présente des moyens de fixation (34) au moyen desquels elle peut être fixée sur une base support.

9. Calibre d'onglet pour la fixation sur une scie ou sur une fraiseuse afin de réaliser un onglet pour les lattes à scier ou à fraiser, comportant des baguettes de correction pouvant pivoter autour d'un axe commun et pouvant être immobilisées si on le désire, caractérisé par le fait qu'il présente une plaque de correction (3) délimités par au moins une arête droite (4), l'axe (5) étant orienté perpendiculairement au plan de ladite plaque (3), par le fait que les baguettes (6, 7, 8) peuvent pivoter indépendamment les unes des autres et peuvent être immobilisées par rapport à ladite plaque (3) ainsi que les unes par rapport aux autres au moyen d'au moins un dispositif de fixation, et par le fait que l'arête droite (4) qui représente le plan de sciage ou de fraisage lorsque les baguettes (6, 7, 8) sont immobilisées est situés extérieurement aux secteurs formés par lesdites baguettes (6, 7, 8).

10. Calibre d'onglet selon la revendication 9, caractérisé par le fait que deux baguettes de correction (6, 7) ou trois baguettes de correction (6, 7, 8) sont prévues, dont l'une peut pivoter à travers ou par dessus les deux autres.

11. Calibre d'onglet selon la revendication 9 ou 10, caractérisé par le fait que les baguettes de correction (6, 7, 8) présentent sur leur surface respectivement au moins deux butées, lesquelles sont disposées le long d'une ligne droite coupant l'axe (5).

12. Calibre d'onglet selon l'une des revendications 9 à 11, caractérisé par le fait que deux baguettes de correction (6, 7) sont reliées au moyen d'une tringlerie (10) du type ciseaux, dont les extrémités libres sont articulées sur lesdites baguettes (6, 7).

13. Calibre d'onglet selon la revendication 12, caractérisé par le fait que dans l'axe (5) est montée, de manière à pouvoir pivoter, une baguette de mesure (9) sur laquelle est représentée une échelle, laquelle, en combinaison avec la tringlerie (10), indique l'angle d'ouverture (β) entre les deux baguettes (6, 7) et que la tringlerie (10) peut être immobilisée, si on le souhaite, sur ladite baguette de mesure (9).

14. Calibre d'onglet selon la revendication 12, caractérisé par le fait que sur la plaque de correction (3) sont représentés des demi-cercles concentriques par rapport à l'axe (5), lesquels indiquent, en combinaison avec la tringlerie 10, l'angle d'ouverture (β) entre les deux baguettes (6, 7), et par le fait que ladite tringlerie (10) peut être immobilisée, si on le souhaite, par rapport à la plaque (3).

15. Calibre d'onglet selon la revendication 13, caractérisé par le fait que la baguette de mesure (9) est réalisée à deux branches, lesdites deux branches (13, 14) recevant entre elles la plaque (3), et par le fait que les extrémités libres desdites branches (13, 14) sont reliées au moyen d'une traverse (15) dans laquelle est montée une vis (16) pouvant tourner dans un trou fileté et au moyen de laquelle ladite baguette de mesure (9) peut être immobilisée par rapport à la plaque (3).

16. Calibre d'onglet selon la revendication 15, caractérisé par le fait que la vis (16) supporte, sur son extrémité orientée vers la plaque de correction (3), une plaque de serrage (17.

17. Calibre d'onglet selon l'une des revendications 9 à 16, caractérisé par le fait que, sur l'arête droite (4) de la plaque (3) et/ou parallèlement à celle-ci, est représentée une droite qui est munie d'une échelle de mesure.

18. Calibre d'onglet selon la revendication 17, caractérisé par le fait que, sur la surface de la plaque de correction (3), est représenté un demi-cercle concentrique par rapport à l'axe (5) et muni d'une graduation, et par le fait que les droites et/ou les demi-cercles sont gravés dans la surface de ladite plaque (3) ou imprimés sur celle-ci, et/ou représenté sur un film collé sur ladite plaque (3).

19. Calibre d'onglet selon la revendication 17, caractérisé par le fait que la droite est représentée par une baguette lumineuse ou une baguette constituée d'une cellule électrique sensible, laquelle est incorporés dans la plaque (3).

20. Calibre d'onglet selon l'une des revendications 9 à 19, caractérisé par le fait qu'au voisinage de l'axe (5) est disposé un dispositif de fixation au moyen duquel les baguettes (6, 7, 8) et la plaque (3) peuvent être serrées les unes par rapport aux autres.

21. Calibre d'onglet selon l'une des revendications 9 à 20, caractérisé par le fait que l'axe (5) est disposé sur l'arête droite (4) ou sur la droite parallèle à cette arête.

22. Calibre d'onglet selon l'une des revendications 13 à 21, caractérisé par le fait que la baguette de mesure (9) présente une fente longitudinale (11) dans laquelle passe et peut y être immobilisée si on le souhaite, l'articulation (12) de la tringlerie (10).

23. Calibre d'onglet selon l'une des revendications 2 à 22, caractérisé par le fait que la plaque de correction (3) est en bois, en métal, ou en matière plastique.

## Revendications (Revendications pour l'(les) Etat(s) contractant(s) suivant(s): DE)

1. Calibre d'onglet pour la fixation sur une scie ou sur une fraiseuse afin de réaliser un onglet pour des lattes à scier ou à fraiser, comportant des baguettes de correction pouvant pivoter autour d'un axe commun et pouvant être immobilisées si on le désire, caractérisé par le fait qu'il présente une plaque de correction (3) délimitée par au moins une arête droite (4), l'axe (5) étant orienté perpendiculairement au plan de ladite plaque (3), par le fait que les baguettes (6, 7, 8) peuvent pivoter indépendamment les unes des autres et peuvent être immobilisées par rapport à ladite plaque (3) ainsi que les unes par rapport aux autres au moyen d'au moins un dispositif de fixation, et par le fait que l'arête droite (4) qui représente le plan de sciage ou de fraisage lorsque les baguettes (6, 7, 8) sont immobilisées est située extérieurement aux secteurs formés par lesdites baguettes (6, 7, 8).

2. Calibre d'onglet selon la revendication 9, caractérisé par le fait que deux baguettes de correction (6, 7) ou trois baguettes de correction (6, 7, 8) sont prévues, dont l'une peut pivoter à travers ou par dessus les deux autres.

3. Calibre d'onglet selon la revendication 9 ou 10, caractérisé par le fait que les baguettes de correction (6, 7, 8) présentent sur leur surface respectivement au moins deux butées, lesquelles sont disposées le long d'une ligne droite coupant l'axe (5).

4. Calibre d'onglet selon l'une des revendications 9 à 11, caractérisé par le fait que deux baguettes de correction (6, 7) sont reliées au moyen d'une tringlerie (10) du type ciseaux, dont les extrémités libres sont articulées sur lesdites baguettes (6, 7).

5. Calibre d'onglet selon la revendication 12, caractérisé par le fait que dans l'axe (5) est montée de manière à pouvoir pivoter, une baguette de mesure (9) sur laquelle est représentée une échelle, laquelle, en combinaison avec la tringlerie (10), indique l'angle d'ouverture (β) entre les deux baguettes (6, 7) et que la tringlerie (10) peut être immobilisée, si on le souhaite, sur ladite baguette de mesure (9).

6. Calibre d'onglet selon la revendication 12, caractérisé par le fait que sur la plaque de correction (3) sont représentés des demi-cercles concentriques par rapport à l'axe (5), lesquels indiquent, en combinaison avec la tringlerie 10, l'angle d'ouverture (β) entre les deux baguettes (6, 7), et par le fait que ladite tringlerie (10) peut être immobilisés, si on le souhaite, par rapport à la plaque (3).

7. Calibre d'onglet selon la revendication 13, caractérisé par le fait que la baguette de mesure (9) est réalisée à deux branches, lesdites deux branches (13, 14) recevant entre elles la plaque (3), et par le fait que les extrémités libre, desdites branches (13, 14) sont reliées au moyen d'une traverse (15) dans laquelle est montée une vis (16) pouvant tourner dans un trou fileté et au moyen de laquelle ladite baguette de mesure (9) peut être immobilisée par rapport à la plaque (3).

8. Calibre d'onglet selon la revendication 15, caractérisé par le fait que la vis (16) supports, sur son extrémité orientée vers la plaque de correction (3), une plaque de serrage (17.

9. Calibre d'onglet selon l'une des revendications 9 à 16, caractérisé par le fait que, sur l'arête droite (4) de la plaque (3) et/ou parallèlement à celle-ci, est représentée une droite qui est munie d'une échelle de mesure.

10. Calibre d'onglet selon la revendication 17, caractérisé par le fait que, sur la surface de la plaque de correction (3), est représenté un demi-cercle concentrique par rapport à l'axe (5) et muni d'une graduation, et par le fait que les droites et/ou les demi-cercles sont gravés dans la surface de ladite plaque (3) ou imprimés sur celle-ci, et/ou représentés sur un film collé sur ladite plaque (3).

11. Calibre d'onglet selon la revendication 17, caractérisé par le fait que la droite est représentée par une baguette lumineuse ou une baguette constituée d'une cellule électrique sensible, laquelle est incorporée dans la plaque (3).

12. Calibre d'onglet selon l'une des revendications 9 à 19, caractérisé par le fait qu'au voisinage de l'axe (5) est disposé un dispositif de fixation au moyen duquel les baguettes (6, 7, 8) et la plaque (3) peuvent être serrées les unes par rapport aux autres.

13. Calibre d'onglet selon l'une des revendications 9 à 20, caractérisé par le fait que l'axe (5) est disposé sur l'arête droite (4) ou sur la droite parallèle à cette arête.

14. Calibre d'onglet selon l'une des revendications 13 à 21, caractérisé par le fait que la baguette de mesure (9) présente une fente longitudinale (11) dans laquelle passe et peut y être immobilisée si on le souhaite, l'articulation (12) de la tringlerie (10).

15. Calibre d'onglet selon l'une des revendications 2 à 22, caractérisé par le fait que la plaque de correction (3) est en bois, en métal, ou en matière plastique.
